# FASCICULE DE BREVET EUROPEEN

(11) **EP 0 889 865 B1**
(45) Date de publication et mention de la délivrance du brevet: **23.05.2001**
(21) Numéro de dépôt: 97903561.5
(22) Date de dépôt: 10.03.1997
(51) Int. Cl.: C05F 9/00, C05F 1/00, C05F 11/00

(54) **PROCEDE BIOTECHNOLOGIQUE POLYVALENT A MODES OPERATOIRES PROGRAMMES POUR LA TRANSFORMATION DE TOUTE BIOMASSE EN NOUVEAUX PRODUITS INDUSTRIELS DE PARFAITE QUALITE BACTERIOLOGIQUE, SANS RESIDUS ULTIMES**
MEHRZWECK-BIOTECHNOLOGISCHES VERFAHREN MIT PROGRAMMGESTEUERTEM BETRIEBSVERFAHREN ZUR UMWANDLUNG VON BIOMASSEN IN INDUSTRIELLE PRODUKTE MIT PERFEKTER BAKTERIOLOGISCHER QUALITÄT OHNE PRODUKTION VON ÜBERRESTEN
MULTI-PURPOSE BIOTECHNOLOGICAL METHOD WITH PROGRAMMED OPERATING MODES FOR CONVERTING ANY BIOMASS INTO NOVEL INDUSTRIAL PRODUCTS HAVING PERFECT BACTERIOLOGICAL QUALITY WITHOUT PRODUCING END RESIDUES

(30) Priorité: 08.03.1996 FR 9602916
(43) Date de publication de la demande: 13.01.1999
(73) Titulaire: Heniqui, Gérard, 1466 Luxembourg (LU)
(72) Inventeur: Heniqui, Gérard, 1466 Luxembourg (LU)
(74) Mandataire: Weyland, J.J. Pierre
(86) Numéro de dépôt international: IB9700233
(87) Numéro de publication internationale: WO9732829

(56) Documents cités:
- FR-A- 2 490 114
- FR-A- 2 565 466
- US-A- 4 246 018
- US-A- 4 292 334
- DATABASE WPI Section Ch, Week 8826 Derwent Publications Ltd., London, GB; Class C03, AN 88-181615 XP002034465 & SU 1 357 003 A (MEAT IND RES INST) , 7 Décembre 1987
- DATABASE WPI Section Ch, Week 9320 Derwent Publications Ltd., London, GB; Class C04, AN 93-164261 XP002034523 & JP 05 097 556 A (MANABE H) , 20 Avril 1993

## Description

La présente invention concerne un procédé de traitement et de transformation de matière d'origine végétale et/ou animale, ou biomasse, par une combinaison d'actions biomécaniques et d'interactions biochimiques dans une enceinte confinée, en nouveaux produits biologiques réutilisables.

La présente invention concerne aussi l'utilisation d'un dispositif pour le traitement et la transformation de biomasse en de tels nouveaux produits.

Actuellement, de nombreux procédés de traitements de matière biologiques permettent, à partir de déchets alimentaires ou de carcasses d'animaux, de fabriquer des produits qui peuvent être réutilisés comme engrais ou comme aliments pour animaux. Un règlement communautaire (EEC 259/93, février 1993) réglemente ce type de traitement, en imposant certaines conditions notamment, une température de traitement de 130°c, sous une pression de 3,5 bar pendant au moins 20 mn.

Outre l'autocuisson, le traitement connu le plus couramment utilisé consiste à chauffer la matière biologique à traiter, afin de la réduire après cuisson et évaporation. Après un chauffage à 90°c, par ajout d'huile, on parvient à des températures de l'ordre de 130°c. Après un certain temps, l'huile est évacuée, et au cours de nouvelles étapes de chauffage et de traitement par des produits acides ou basiques, le produit final est extrait.

Pour obtenir de bons résultats, il est nécessaire d'effectuer ce traitement sur une durée très longue qui peut aller jusqu'à plusieurs jours, pendant lesquels la matière biologique dégradable en attente d'être traitée, doit être stockée. Ce traitement nécessite de nombreuses manipulations et l'adjonction de produits chimiques extérieurs (huile, produits acides, contact avec les gaz d'environnement,...), qui augmentent les risques de contamination de la matière en cours de traitement, et la pollution due à l'évacuation des gaz et des composants résidus. Cela est d'autant plus grave, que ce type de traitement ne garantit pas la destruction des bactéries ni de tous les vecteurs pathogènes pouvant être néfastes dans l'utilisation des produits finis (en particulier dans le cas de fabrication de protéine d'origine animale, comme de la farine de viande). Par ailleurs, ce traitement fournit des produits de valeur nutritionnelle aléatoire, et ne garantit aucune constance des produits obtenus. Le coût important de ces traitements, leur faible rendement (faible quantité traitée pendant une longue durée, avec des coûts importants) et le fait que le prix de vente des produits finis dépende des cours des produits protéiques, rend ce type de traitement difficilement viable commercialement. Enfin, ce type de traitement consomme beaucoup d'énergie, ce qui vient s'ajouter aux problèmes globaux de coût et de pollution.

Par conséquent, les types de procédés de traitements connus de produits alimentaires ou d'engrais, ne permettent pas de répondre efficacement aux graves problèmes de carence alimentaire, de mauvaise qualité bactériologique de l'alimentation, et de restructuration et désertification des sols.

Il existe donc un réel besoin d'un procédé de traitement qui soit rapide, économique, non polluant et simple à mettre en oeuvre, et qui permette d'obtenir des produits finis à moindres coûts et à haute qualité bactériologique constante.

L'objet de la présente invention est de répondre à ce besoin et de permettre de pallier les problèmes liés aux procédés de traitement connus du type de ceux évoqués plus haut, grâce à des actions biomécaniques sur la matière, c'est à dire en faisant varier des paramètres physiques indépendamment les uns des autres, sans utilisation de produits chimiques extérieurs.

Dans ce but, la présente invention concerne un procédé de traitement et de transformation de matière bio-organique d'origine végétale et/ou animale, par une combinaison d'action biomécaniques aux fins de provoquer des interactions biochimiques et bio-physiques, dans une enceinte confinée, en nouveaux produits biologiques, qui est caractérisé en ce qu'il comporte les étapes suivantes :
a) chauffage de la matière à partir de la température de chargement T_{A} jusqu'à une température T_{B} de l'ordre de 117°c, entraînant une augmentation de la pression jusqu'à une valeur P_{B} de l'ordre de 3 bar, et malaxage de la matière à une vitesse comprise entre 5 et 15 t/mn, pendant une durée de l'ordre de 15 minutes,
b) augmentation simultanée de la température de T_{B} à T_{C} et de la pression de P_{B} à P_{C} jusqu'à des valeurs respectives de l'ordre de 150°c et 5 bar, et augmentation de la vitesse de malaxage de l'ordre de 2 à 20 t/mn, pendant une durée de l'ordre de 10 minutes,
c) diminution de la température de T_{C} à T_{D} de l'ordre de 135°, et augmentation de la pression de Pc à une valeur P_{D} comprise entre 10 et 20 bar, et augmentation de la vitesse de malaxage jusqu'à environ 15 t/mn, pendant une durée de l'ordre de 20 à 30 minutes,
d) hydrolyse et homogénéisation à température T_{D} et pression P_{D} constantes, et à vitesse de malaxage constante augmentée de l'ordre de 10 à 40 t/mn, pendant une durée comprise entre 20 et 30 mn,
e) déshydratation par refroidissement de la matière, et diminution de la pression jusqu'à des valeurs respectives de T_{E} et P_{E} d'au plus 90°c et 0,5 bar, permettant des nouveaux traitements de séchage et de conditionnement ou un nouveau chargement de matière, à une vitesse de malaxage constante réduite de l'ordre de 5 à 10 t/mn.

Le procédé selon la présente invention peut être suivi, une ou plusieurs fois, par les étapes suivantes:
f) rechargement de matière à température T_{E} et pression P_{E} correspondant à la température et à la pression de la matière déjà traitée,
g) augmentation simultanée de la température et de la pression jusqu'à des valeurs respectives T_{F} de l'ordre de 135°c et P_{F} comprise entre 10 et 20 bar, tout en augmentant la vitesse de malaxage jusqu'à des valeurs de l'ordre 20 t/mn, pendant une durée de l'ordre de 4 minutes,
h) hydrolyse secondaire et homogénéisation à température et pression constantes T_{F} et P_{F}, à une vitesse de malaxage augmentée constante de l'ordre d'au moins 20 t/mn, pendant une durée de l'ordre de 3 minutes, et
i) déshydratation par refroidissement de la matière, et diminution de la pression jusqu'à des valeurs respectives de T_{G} inférieure ou égale à 90°c et P_{G} inférieur ou égale à 0,5 bar, permettant des nouveaux traitements de séchage et de conditionnement ou un nouveau chargement de matière, à vitesse de malaxage réduite de l'ordre de 5 à 10 t/mn, pendant une durée pouvant aller jusqu'à 20 mn.

Avantageusement, le procédé selon l'invention est précédé par une phase de calibrage de la matière par broyage, de préchauffage à des températures T_{A} de l'ordre de 20° à 90°c, et de malaxage, avant le chargement ou le rechargement de matière.

De plus, il peut comporter, entre chaque étape d'augmentation simultanée de température et de pression, une étape de stérilisation de la matière à pression (P_{C}) et température (T_{C}) constantes, et diminution de la vitesse de malaxage à une valeur maintenue constante de l'ordre de 10 t/mn durant ce palier.

Les étapes de montée en pression se font par un apport de gaz simple ou neutre, ou de gaz particulier, dont la température est contrôlée pour suivre celle de la matière traitée. De préférence, les étapes de déshydratation se font par évacuation du mélange des gaz d'exhaure et de la vapeur d'eau par balayage de la surface de la matière par de l'air ou du gaz réchauffé à une température correspondant à celle de la matière

Avantageusement, la matière est soumise à des ultrasons durant les étapes de montées en pression, et en particulier durant la prise de masse, et à un champ magnétique durant les étapes de montées en pression, palier d'hydrolyse et d'homogénéisation, et/ou de descente en pression.

Par ailleurs, la présente invention concerne aussi l'utilisation pour le traitement et la transformation de matière organique, végétale ou animale, d'un dispositif comportant
. une enveloppe extérieure et une enveloppe intérieure, l'enveloppe intérieure recevant la matière à traiter et à transformer,
. un rotor muni de bras et entraîné par un moteur pour le broyage, le malaxage, la trituration, l'agitation et la vidange de la matière et des nouveaux produits,
. un conduit de chargement de matière dans l'enveloppe intérieure,
. un premier conduit d'injection de gaz permettant l'augmentation de la pression dans ladite enveloppe,
. une première source de chauffage comportant un dispositif de chauffage et un système de conduits permettant le chauffage de l'enveloppe intérieure par circulation, sur ses paroi, de gaz ou d'un fluide caloporteur dont la température est commandée par le dispositif de chauffage,
. une seconde source de chauffage consistant en un fluide caloporteur circulant tout au long de l'intérieur du rotor, et
. une troisième source de chauffage consistant en flux d'air ou de gaz chauffé, injecté dans l'enveloppe intérieure par un second conduit d'injection de gaz à la température de la matière et balayant la surface libre de celle-ci, la température de ces trois sources de chauffage étant régulée par au moins un dispositif distributeur et échangeur thermique entre ces trois sources de chauffage,
. le second conduit d'injection de gaz permettant d'évacuer les gaz malodorants dégagés dans l'enveloppe intérieure par un conduit d'évacuation, ce conduit d'évacuation étant muni d'un dispositif de mise en dépression afin que ces gaz soient injectés dans un dispositif de chauffage pour y être oxydés, pyrolysés et réutilisés par une première source de chauffage comme gaz caloporteur,
. au moins un dispositif à ultrasons disposé de manière à pouvoir émettre des ultrasons dans l'enveloppe intérieure,
. au moins un dispositif d'émission de champs magnétiques disposé de manière à diffuser des champs magnétiques dans l'enveloppe intérieure,
. une unité centrale de contrôle de la pression, de la température, de la vitesse de rotation du rotor et de l'hygrométrie dans l'enveloppe intérieure, de commande de la puissance des différentes sources de chauffage et de la vitesse du rotor, ainsi que du déclenchement et de l'arrêt des dispositifs d'émission d'ultrasons et de champs magnétiques, à partir de données entrées, et
. un dispositif de réglage à l'intérieur de la chambre de pyrolyse permettant d'augmenter ou de diminuer la turbulence des gaz brûlés afin d'en augmenter ou d'en diminuer ainsi le temps de séjour en fonction de la température de pyrolyse comprise entre 700° et 2000° C.

Le procédé selon l'invention réalise les transformations des matières organiques, séparément ou en mélange, par craquage de celles-ci avec hydrolyse biomécanique, interactions biochimiques et physico-chimiques contrôlées des composants de la matière, créations de nouvelles liaisons moléculaires de qualités complémentaires, homogénéisation, restructuration et stabilisation des nouvelles molécules et arrangements moléculaires, et conditionnement des farines et granulés.

Ce procédé permet ainsi la transformation totale de la matière chargée en produits décomposés en ses composants les plus simples, sans déchets en cours ou en fin de procédé de traitement et de transformation.

Au delà du simple traitement des procédés connus, le procédé selon l'invention permet la production par transformation, de nouvelles structures biologiques simples, composites, restructurées et spécifiées dont la valeurs nutritionnelle optimale est spécifique, équilibrée et directement assimilables par les organismes vivants, animaux et végétaux. Ce procédé ne nécessite aucune manipulation complexe, assure une excellente qualité bactériologique des produits finis, avec un très bon coefficient de transformation.

D'autre part, un autre avantage de la présente invention, est que dans les techniques connues, les substances nutritives et les principes actifs indispensables qui sont concentrés dans la peau des fruits et des légumes, par exemple, sont éliminés comme déchets. Le procédé selon la présente invention permet la revalorisation de ces matières non réutilisables dans les procédés traditionnels, et garantit la biodisponibilité des nutriments après destruction des principes toxiques.

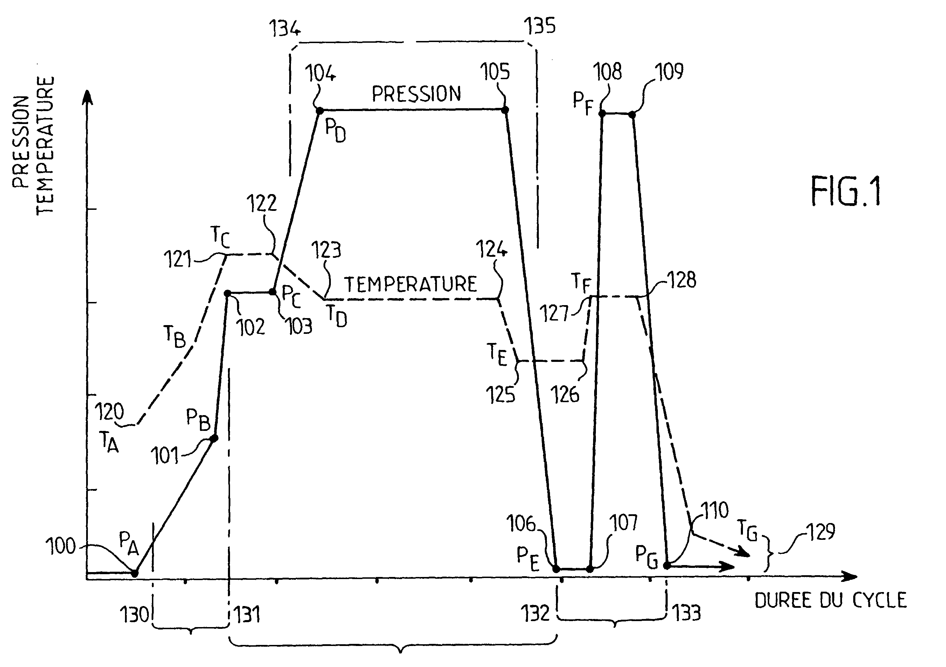

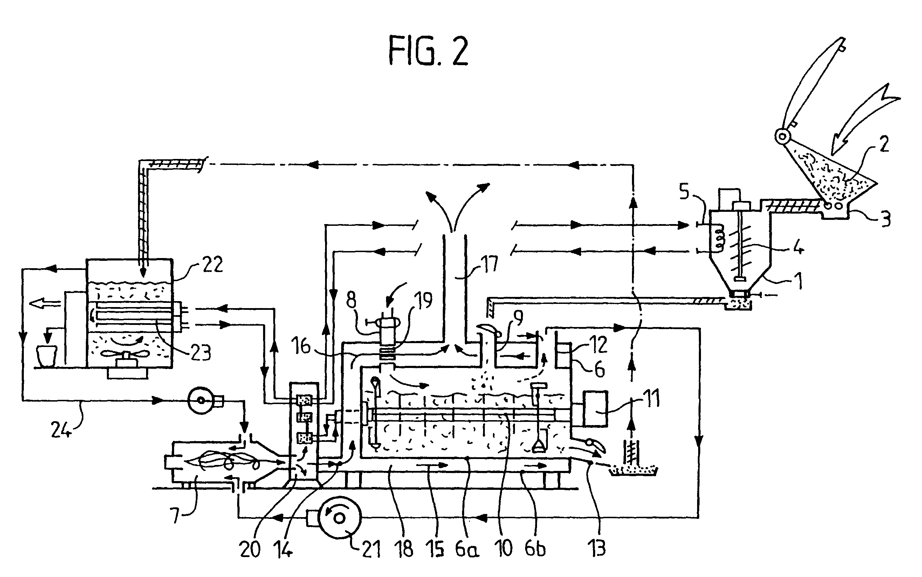

La présente invention sera mieux comprise et des caractéristiques et avantages supplémentaires apparaîtront à la lumière de la description détaillée qui va suivre, illustrée par les figures suivantes :
. la figure 1 représente un diagramme fonctionnel d'un mode opératoire du procédé selon l'invention, et
. la figure 2 représente un mode de réalisation d'un dispositif permettant la mise en oeuvre du procédé selon la présente invention.

Au cours d'une première étape non représentée sur la figure 1, la matière organique d'origine végétale et animale, ou biomasse, est broyée et préchauffée progressivement pour monter lentement en température jusqu'à environ T_{A}= 80° ou 90°c. Dans l'exemple décrit, la matière traitée est d'origine animale. Cette matière est maintenue à cette température pendant une durée de 180 mn à pression atmosphérique, tout en étant malaxée par un moyen malaxeur de type rotor, tournant à une vitesse comprise entre 12 et 15 t/mn.

De préférence, afin de maintenir un calibrage homogène de la matière pendant le chauffage et le malaxage, comme par exemple sous forme de particules de dimension inférieure à 30 mm, la matière peut être soumise à des ultrasons durant cette phase.

La matière est ensuite traitée selon les dispositions de la figure 1. Sur cette figure, la courbe en traits pleins Cₚ représente l'évolution du contrôle par rapport au temps de la pression (100 à 110), et la courbe en traits pointillés C_{T} représente l'évolution parallèle du contrôle de la température (120 à 129), de la matière et de son environnement.

Après cette étape de pré-traitement de la matière à la température T_{A} et à la pression atmosphérique P_{A}, la première étape 100-101 consiste à augmenter la température tout en malaxant la matière calibrée à une vitesse comprise entre 5 et 15 t/mn pendant environ 15 mn. Puis, au cours de la seconde étape 101-102, à partir de valeurs prédéterminées de température T_{B} et de pression P_{B} obtenues, on augmente simultanément la température jusqu'à, par exemple, T_{C}= 150°, et la pression jusqu'à une valeur P_{C} comprise entre 2 et 5 bars, par apport progressif de gaz, tout en augmentant la vitesse de malaxage de, par exemple, 2 à 20 t/mn pendant une durée de l'ordre de 10 mn.

Avantageusement, durant cette étape 101-102, la matière peut être soumise à des ultrasons de manière à empêcher la prise de masse de la matière pendant cette étape de montée en pression, température et vitesse de malaxage. Ce moment critique peut être décelé grâce à une mesure de l'augmentation de la consommation de puissance du moteur qui entraîne le rotor de malaxage. Une telle utilisation d'ultrasons à ce moment précis, peut permettre de limiter la consommation du moteur, par rapport à la puissance nécessaire que le moteur devrait développer pour maintenir la vitesse de malaxage de la matière à une valeur donnée. L'expérience a montré que la puissance installée pouvait être ramenée à 75 kW au lieu de 160 kW. De préférence, les ultrasons sont déclenchés sous une pression de 2 bar.

L'étape suivante est une étape de stérilisation de la matière 102-103, étape nécessaire dans le cas de matière thermo-sensible, d'une durée de l'ordre de 10 à 30 mn, à température T_{C} et pression P_{C} constante, la vitesse de malaxage étant réduite pour devenir constante autour de 10 t/mn.

Au cours de l'étape suivante 103-104, la pression est rapidement augmentée jusqu'à une valeur de l'ordre de P_{D}= 5 à 20 bars par apport de gaz, ainsi que la vitesse de malaxage jusqu'à environ 15 t/mn pendant une durée de 20 à 30 mn. Parallèlement, la température T_{C} est maintenue constante, voir diminuée jusqu'à une valeur T_{D} de l'ordre de 135°c.

Cette étape de montée rapide en pression 103-104 est suivie d'une étape d'hydrolyse et d'homogénéisation 104-105, correspondant à un palier en température T_{D} et en pression à P_{D} entre 5 et 10 bars, avec une vitesse de malaxage entre 10 et 30 t/mn. Après quelques dizaines de minutes (de préférence entre 20 et 30), la température est abaissée jusqu'à une valeur T_{E} inférieure ou égale à 117°c.

Après une durée plus longue, durant une étape de déshydratation 105-106, la pression est, par exemple, abaissée de 10 bar jusqu'à la pression atmosphérique ou une pression de 0,5 bar, de manière plus ou moins rapide (en 3 ou 4 minutes, ou en 4 à 20 minutes) en fonction de la nature des nouveaux composants présents. Cette phase de décompression est réalisée pour obtenir une réaction de type flash ou une déshydratation rapide mais partielle du produit. La température est maintenue constante à T_{E}, et la vitesse de malaxage est maintenue entre 5 et 10 t/mn. Cette dépressurisation s'effectue tout en évacuant le mélange de gaz d'exhaure et de vapeur d'eau par envoi à la surface de la matière de l'air ou du gaz chauffé à une température correspondant à la température de la matière. Il est à noter que, dans le dispositif préférentiel de mise en oeuvre décrit plus bas, ces mélanges gazeux évacués sont récupérés par le système général de chauffage, et brûlés par pyrolyse dans la chambre de génération d'énergie du dispositif, pour être réutilisés dans le système de chauffage du dispositif.

Après le palier de stérilisation, les inter-réactions bio-chimiques sont provoquées et contrôlées, et se matérialisent principalement par la recomposition de nouveaux arrangements moléculaires après une première rupture notamment des chaînes carbonées longues (C12) en chaînes courtes prédéterminées de type, par exemple, C4 à C6. Ces nouvelles associations et combinaisons sont provoquées par les transferts d'ions de charges opposées, libérés par les réactions d'hydrolyse, et particulièrement par la rupture des chaînes carbonées ainsi que, par exemple, des arrangements moléculaires initiaux. Pour amplifier ces phénomènes, ceux-ci peuvent se passer en milieu gazeux injecté durant, notamment, les montées en pression. Ces gaz peuvent être des gaz simples ou neutres, comme par exemple, de l'azote N₂ pour empêcher toute oxydation ou CO₂ pour modifier le PH, ou des gaz spéciaux comme catalyseurs pour favoriser l'inertage des métaux lourds.

L'étape suivante 106-107 peut être consacrée au rechargement de matière organique après le traitement et la transformation de matière organique animale. Dans l'exemple décrit, ce chargement se fait avec de la matière organique végétale ayant déjà subit l'étape de pré-traitement initiale, comme la matière organique animale précédemment.

Après le rechargement 106-107, la pression est rapidement augmentée par injection de gaz spéciaux, passant de la pression P_{E} à une pression P_{F} de l'ordre de 10 à 20 bar, ainsi que la vitesse de malaxage qui est amenée progressivement jusqu'à une valeur entre 10 et 30 t/mn. La température est augmentée jusqu'à une valeur inférieure ou égale à 135°c. Ces montée en pression, température et vitesse de malaxage s'effectue dans un intervalle de temps de 3 à 10 minutes. De même que précédemment, la matière peut avantageusement être soumise à des ultrasons pendant ces montées en température, en pression et en vitesse de malaxage.

Avantageusement, lors de cette montée en température, en pression et en vitesse de malaxage, on peut soumettre la matière à un champ magnétique de l'ordre de 2 à 20 Oe. En particulier, on peut appliquer le champ magnétique dés que la température T_{F}= 135° est atteinte, le maintenir sur le palier d'hydrolyse et d'homogénéisation, et le stopper aux alentours du milieu de l'étape suivante de déshydratation 109-110.

Une nouvelle étape d'hydrolyse et d'homogénéisation secondaires est réalisée à pression constante P_{F} de l'ordre de 10 à 20 bar, température constante TF inférieure ou égale à 135°c, et vitesse de malaxage constante entre 10 et 30 t/mn, pendant une durée maximum de 20 minutes.

Enfin, une étape de déshydratation par diminution de la température et de la pression jusqu'à la pression atmosphérique ou de même nature que précédemment, à une vitesse de malaxage constante réduite de l'ordre de 5 à 10 t/mn. De même que dans l'étape de déshydratation précédente, cette étape s'effectue en évacuant le mélange des gaz d'exhaure et de la vapeur d'eau par balayage de la surface de la matière par l'air ou le gaz chauffé à une température correspondant à celle de la matière transformée. Selon les produits que l'on souhaite obtenir, un nouveau chargement de matière et un nouveau cycle du type des deux cycles précédents peut être mis en oeuvre.

Puis, la matière est refroidie (par exemple par injection d'eau glacée) et séchée de manière à être conditionnée et stockée. De même qu'au cours des étapes précédentes, durant l'étape de séchage, aucun gaz ou corps extérieur ne doit être en contact avec la matière traitée et transformée. On peut, dans le cas où les produits obtenus sont des produits thermo-sensibles, faire un séchage sous vide (sous des températures de 40 à 70°c) afin de ne pas altérer les structures de ces produits. Dans d'autres cas, on peut appliquer un séchage à disques, consistant à faire passer les produits obtenus sur des disques empilés, chacun de ces disques pouvant être contrôlé pour avoir une température donnée.

Il est à noter, que la perte en teneur d'humidité sur tout le procédé complet, séchage inclus, est de 98%, et dans des temps limités à quelques heures, d'où la stabilisation des produits..

Il est bien évident que les valeurs données de pression, températures et vitesse de malaxage, doivent être adaptées pour chaque type de matières et de produits particuliers à fabriquer, auxquels sont associées des recettes particulières. Les paramètres physiques étant contrôlés indépendamment les uns des autres, les durées relatives de montées, de descente et de palier peuvent varier d'un paramètre à l'autre pour une même recette.

On peut ainsi, en contrôlant indépendamment la température, la pression et la vitesse de malaxage, l'hygrométrie, la durée des étapes, sans recours à des adjuvants ni catalyseurs chimiques, sans produire de résidus ultimes, et sans rejeter de produits toxiques, parvenir à réaliser une véritable transformation systématique des matières organiques en nouveaux produits industriels à fortes plus-values dont les caractéristiques bio-chimiques et bio-physiques sont distinctes de celles des composants intrants.

Le procédé selon l'invention permet ainsi de traiter et transformer la matière organique en concentrés alimentaires ou en engrais très rapidement, puisque trois heures peuvent suffir à un traitement complet. Il consomme peu d'énergie en comparaison avec les procédés connus, et les produits finaux sont de grande qualité constante et reproductible.

Ce procédé permet la production de nouvelles structures biologiques simples, composites, restructurées et spécifiées, à partir de matières organiques d'origine animale et végétale quelle que soit leur origine, leur texture, leur état de conservation ou de contamination, grâce à l'exploitation optimale des propriétés biochimiques intrinsèques des composants fondamentaux de ces matières (acides aminés et acides gras par exemple).

Le procédé selon l'invention peut être avantageusement mis en oeuvre par l'utilisation du dispositif de la figure 2, décrit ci-après.

Ce dispositif comporte un ou plusieurs préchauffeurs - malaxeurs 1 dans lequel va être chargée la matière à traiter 2, qui a pu auparavant être calibrée en fonction de la nature du traitement à réaliser, par un broyeur 3. Ce préchauffeur - malaxeur 1 est de préférence conique et muni d'un rotor 4 à vis sans fin raclant la paroi de manière à ce que la matière ne colle pas aux parois. Le chauffage 5 du préchauffeur - malaxeur 1 est réalisé à partir du système global de chauffage qui sera décrit plus bas. Avantageusement, le préchauffeur - malaxeur 1 est muni d'un dispositif à ultrasons (non représenté sur la figure) permettant de soumettre la matière à l'intérieur du préchauffeur - malaxeur à des ultrasons pour obtenir un calibrage minimum.

Après l'étape de préchauffage et de calibrage du procédé, la matière est introduite en 9 dans un réacteur 6 comportant un générateur d'énergie ou dispositif de chauffage 7, une double enveloppe, intérieure 6a et extérieure 6b, un conduit d'injection d'air ou de gaz chauffé 8, une entrée 9 de matière à traiter, un rotor à bras 10 entraîné par un moteur 11 pour le malaxage, le broyage, la trituration et l'agitation, une évacuation des gaz dégagés à l'intérieur du réacteur 6, un second conduit d'injection de gaz (non représenté) et une vidange 13 de la matière traitée et transformée. Ce dispositif peut aussi comporter des dispositifs à ultrasons qui peuvent être déclenchés durant les étapes de montée en pression, et en particulier au moment de la prise de masse dans l'enveloppe intérieure, et à champ magnétique non représentés sur la figure.

En particulier, afin de parfaitement maîtriser la température de la matière à l'intérieur de ce réacteur, celui-ci comporte trois sources potentielles de chaleur.

Le chauffage entre les deux enveloppes 6a et 6b est assuré par le générateur d'énergie 7 à fort gradient de montée en température pour assurer une meilleur décohésion moléculaire. Les gaz issus de la chambre de chauffe du générateur d'énergie 7 sont diffusés dans des carneaux communiquant entre eux et disposés en quinconce sur la paroi de l'enveloppe intérieure, dans l'espace entre les deux enveloppes selon les flèches 14, 15 et 16, et ressortent à l'extérieur par la cheminée 17. De préférence, les carneaux dans l'espace 18 entre les enveloppes 6a et 6b sont munis d'aiguilles de récupération d'énergie (non représentées sur la figure) en partie haute et basse, pour améliorer encore la répartition et la stabilisation du chauffage de l'enveloppe intérieur 6a. Cela permet ainsi un chauffage indirect, régulier, homogène et progressif par les parois de l'enveloppe intérieure.

Il est évident que, dans un mode de réalisation différent, un fluide caloporteur peut être utilisé à la place de gaz.

La seconde source de chauffage est assurée par le chauffage du rotor malaxeur 10 au centre de la matière, dans lequel circule un fluide caloporteur. Ce rotor 10 assure un chauffage homogène et régulier au coeur de la matière.

La troisième source de chauffage est constituée par le balayage de la surface libre de la matière malaxée à l'intérieur du réacteur par l'apport d'air frais ou de gaz en 8 réchauffées de préférence dans l'échangeur thermique 19 avec les gaz circulant entre les enveloppes. Ce balayage d'air chaud assure le chauffage de la matière en partie supérieure et favorise la vaporisation et le maintien de la température de la vapeur d'eau extraite en phase de déshydratation et de refroidissement de l'enveloppe intérieur 6a.

Ainsi, ces trois sources de chauffage complémentaires, assurent un contrôle parfait de la température de la matière, permettant un chauffage indirect, régulier, homogène et progressif contrôlable à 1° C près, indispensable à la mise en oeuvre du procédé selon l'invention.

Afin d'homogénéiser la température de ces trois sources, le dispositif selon l'invention est muni d'un bloc d'échange thermique 20 qui permet de distribuer, de maintenir et de faire varier les trois sources de chauffage aux mêmes températures et au même moment.

Les dégagements de gaz d'exhaure de l'air réchauffé, de la vapeur d'eau et des molécules odorantes sont évacués par le conduit 12, et sont introduites dans la chambre de chauffe du générateur d'énergie 7 via un ventilateur - extracteur 21 pour être brûlés par effet pyrolyse à température et durée prédéterminées, et dirigés dans le volume entre les deux enveloppes du réacteur pour assurer le chauffage de celui-ci, ainsi que celui de l'air ou du gaz d'appoint via l'échangeur et régulateur thermique 19.

Les produits en fin de cycle de traitement et de transformation sont évacués du réacteur en 13 pour être séchés et conditionnés dans une installation de séchage intégrée et de conditionnement 22. Celle-ci peut appliquer au produit final une étape supplémentaire de brassage et de chauffage par un dispositif 23 utilisant un fluide caloporteur fourni par le bloc d'échange thermique 20. Les gaz issus du séchage sont évacués en 24 vers la chambre de chauffe du générateur d'énergie 7 pour être pyrolysés et réutilisés pour le chauffage du réacteur.

Enfin, le dispositif distributeur et échangeur thermique 20 peut aussi commander le chauffage du ou des préchauffeurs - malaxeurs 1 des différents types de matières à traiter.

Un dispositif de réglage (non représenté sur la figure) à l'intérieur de la chambre de pyrolyse permettant d'augmenter ou de diminuer la turbulence des gaz brûlés afin d'en augmenter ou d'en diminuer ainsi le temps de séjour en fonction de la température de pyrolyse comprise entre 700° et 2000° C.

Une unité centrale de commande électronique (non représentée sur la figure) des différents éléments du dispositif permet le contrôle automatique et programmable des différents paramètres entrant en jeu dans le procédé selon la présente invention, en fonction des matières à traiter et des produits à obtenir. En particulier, cette unité centrale contrôle la température, la pression, la vitesse de rotation du rotor et l'hygrométrie dans l'enveloppe intérieure, pour commander la puissance des différentes sources de chauffage, l'injection de gaz, et la vitesse de rotation du rotor, ainsi que le déclenchement et l'arrêt des dispositifs d'émission d'ultrasons et de champs magnétiques, à partir des données de la recette à mettre en oeuvre.

Ainsi on peut constater que ce dispositif permet principalement de maîtriser les différents paramètres comme la température, la pression, la vitesse de malaxage et l'hygrométrie indépendamment les uns des autres, qu'il peut assurer un chauffage homogène, régulier et progressif, qu'il évite à la matière traitée tout contact avec des gaz ou des éléments extérieurs contaminants, et enfin qu'il limite grandement la pollution par rapport aux procédés de traitement connus, puisque les gaz dégagés sont brûlés et réutilisés dans le dispositif pour la chauffage.

La présente invention trouve de nombreuses applications, notamment, la fabrication de nouveaux produits industriels se présentant sous forme de concentrés alimentaires, notamment pour l'alimentation animale, ou sous forme d'engrais bio-organiques concentrés, ou encore de combustible carbonés de très bonne qualité.

Les produits fabriqués par ce procédé permettent l'alimentation des polygastriques et ruminants, des monogastriques (porcs, volailles, chiens, chats,...), des poissons en piscicultures et aquacultures.

Ce procédé permet aussi l'exploitation de nouveaux gisements de biomasse tels que pulpes d'olives, de raisins, de légumes, d'agrumes et autres matières de ce type.

En fonction du réglage des différents paramètres de fonctionnement indépendants, ce procédé permet aussi la production de supports de culture et fertilisants, engrais et adjuvants bio-organiques multiples, de fumure d'entretien et de redressement, de fixation de l'azote minérale et de régénération des terreaux, de reconstruction des ciments colloïdaux et composants humiques structurels, de stabilisation, assainissement et équilibrage de compost de toute origine, et l'inertage des métaux lourds, ainsi que l'élimination des toxiques.

D'autres applications sont possibles en sylviculture, en culture nouvelle de reconversion comme la pharmacologie, la phytothérapie, la cosmétologie et la parfumerie.

Pour les matières d'origine animale, les retraitements peuvent concerner, par exemple, les matières des industries d'agro-élevage, telles que les élevages bovins, ovins, porcins, la pèche, ..., les matières et sous-produits des industries agro-alimentaires, telles que les conserveries, les abattoirs, les laiteries et fromageries, les matières déchets de pisciculture et les sous-produits divers comme les déchets de cuisine, les boues de stations d'épuration, les matières de vidanges...

Pour les matières d'origine végétales, les retraitements peuvent concerner, les matières et sous-produits des industries agro-alimentaires telles que les brasseries, les sucreries, les huileries, les vinifications et pressoirs,..., les sous-produits des industries du bois et des papeteries.

Grâce au procédé selon l'invention, on peut fabriquer dans des conditions optimales et à très bas prix, des substrats de culture pour des souches bactériennes pures, présélectionnées, soit pour en assurer le développement rapide, soit pour procéder au transfert et au développement de telles souches. De même, peut-on produire à très bon marché, des nouvelles protéines unicellulaires par fermentation de substrats glucidiques précédemment obtenues par le procédé à partir d'intrants cellulosiques par exemple.

## Revendications

1. Procédé de traitement et de transformation de matière bio-organique d'origine végétale et/ou animale, par une combinaison d'action biomécaniques dans une enceinte confinée (6,6a,6b), en nouveaux produits biologiques, caractérisé en ce qu'il comporte les étapes suivantes :
a) chauffage de la matière (120) à partir de la température de chargement T_{A} jusqu'à une température T_{B} de l'ordre de 117°c, entraînant une augmentation de la pression (100-101) jusqu'à une valeur P_{B} de l'ordre de 3 bar, et malaxage de la matière à une vitesse comprise entre 5 et 15 t/mn, pendant une durée de l'ordre de 15 minutes,
b) augmentation simultanée de la température (120,121) de T_{B} à T_{C} et de la pression de (101-102) P_{B} à P_{C} jusqu'à des valeurs respectives de l'ordre de 150°c et 5 bar, et augmentation de la vitesse de malaxage de l'ordre de 2 à 20 t/mn, pendant une durée de l'ordre de 10 minutes,
c) diminution de la température (122-123) de T_{C} à T_{D} de l'ordre de 135°, et augmentation de la pression (103-104) de Pc à une valeur P_{D} comprise entre 10 et 20 bar, et augmentation de la vitesse de malaxage jusqu'à environ 15 t/mn, pendant une durée de l'ordre de 20 à 30 minutes,
d) hydrolyse et homogénéisation à température T_{D} (123-124) et pression P_{D} (104-105) constantes, et à vitesse de malaxage constante augmentée de l'ordre de 10 à 40 t/mn, pendant une durée comprise entre 20 et 30 mn,
e) déshydratation par refroidissement de la matière (124-126), et diminution de la pression (105-106) jusqu'à des valeurs respectives de T_{E} et P_{E} d'au plus 90°c et 0,5 bar, permettant des nouveaux traitements de séchage et de conditionnement ou un nouveau chargement de matière, à une vitesse de malaxage constante réduite de l'ordre de 5 à 10 t/mn.

2. Procédé selon la revendication, caractérisé en ce qu'il est suivi, une ou plusieurs fois, par les étapes suivantes:
f) rechargement (106-107,126) de matière à température T_{E} et pression P_{E} correspondant à la température et à la pression de la matière déjà traitée,
g) augmentation simultanée de la température (126-127) et de la pression (107-108) jusqu'à des valeurs respectives T_{F} de l'ordre de 135°c et P_{F} comprise entre 10 et 20 bar, tout en augmentant la vitesse de malaxage jusqu'à des valeurs de l'ordre 20 t/mn, pendant une durée de l'ordre de 4 minutes,
h) hydrolyse secondaire et homogénéisation à température (127-128) et pression (108-109) constantes T_{F} et P_{F}, à une vitesse de malaxage augmentée constante de l'ordre d'au moins 20 t/mn, pendant une durée de l'ordre de 3 minutes, et
i) déshydratation par refroidissement de la matière (128-129), et diminution de la pression (109-110) jusqu'à des valeurs respectives T_{G} inférieure ou égale à 90°c et P_{G} inférieure ou égale à 0,5 bar, permettant des nouveaux traitements de séchage et de conditionnement ou un nouveau chargement de matière, à vitesse de malaxage réduite de l'ordre de 5 à 10 t/mn, pendant une durée pouvant aller jusqu'à 20 mn.

3. Procédé selon la revendication 1 ou 2, caractérisé en ce qu'il est précédé par une phase de calibrage de la matière par broyage, de préchauffage à des températures T_{A} de l'ordre de 20° à 90°c, et de malaxage, avant le chargement de la matière.

4. Procédé selon l'une quelconque des revendications précédentes, caractérisé en ce qu'il comporte, entre chaque étape d'augmentation simultanée de température et de pression, une étape de stérilisation (121-122,102-103) de la matière à pression (P_{C}) et température (T_{C}) constantes, et diminution de la vitesse de malaxage à une valeur maintenue constante de l'ordre de 10 t/mn durant ce palier.

5. Procédé selon l'un quelconque des revendications précédentes caractérisé en ce que les étapes de montée en pression se font par un apport de gaz simple ou neutre, ou de gaz particulier, dont la température est contrôlée pour suivre celle de la matière traitée.

6. Procédé selon l'une quelconque des revendications précédentes, caractérisé en ce que les étapes de déshydratation se font par évacuation du mélange des gaz d'exhaure et de la vapeur d'eau par balayage de la surface de la matière par de l'air ou du gaz réchauffé à une température correspondant à celle de la matière

7. Procédé selon l'une quelconque des revendications précédentes, caractérisé en ce que la matière est soumise à des ultrasons durant les étapes de montées en pression.

8. Procédé selon la revendication 7, caractérisé en ce que la matière est soumise à des ultrasons au moment de la prise de masse.

9. Procédé selon l'une quelconque des revendications précédentes, caractérisé en ce que la matière est soumise à un champ magnétique durant les étapes de montées en pression, palier d'hydrolyse et d'homogénéisation, et/ou de descente en pression.

10. Procédé selon l'une quelconque des revendications précédentes, caractérisé en ce que le gaz simple ou neutre utilisé est constitué d'azote (N₂) et/ou de gaz carbonique (CO₂).

11. Utilisation pour le traitement et la transformation de matière organique, végétale ou animale, d'un dispositif (6) comportant
. une enveloppe extérieure (6b) et une enveloppe intérieure (6a), l'enveloppe intérieure (6a) recevant la matière à traiter et à transformer,
. un rotor (10) muni de bras et entraîné par un moteur (11), pour le broyage, le malaxage, la trituration, l'agitation et la vidange de la matière et des produits obtenus,
. un conduit de chargement de matière dans l'enveloppe intérieure (6b),
. un premier conduit d'injection de gaz permettant l'augmentation de la pression dans ladite enveloppe,
. une première source de chauffage comportant un dispositif de chauffage (20) et un système de conduits (14,15,16) permettant le chauffage de l'enveloppe intérieure par circulation, sur ses paroi, de gaz ou d'un fluide caloporteur dont la température est commandée par le dispositif de chauffage (20),
. une seconde source de chauffage consistant en un fluide caloporteur circulant tout au long de l'intérieur du rotor (10), et
. une troisième source de chauffage consistant en flux d'air ou de gaz chauffés, injecté dans l'enveloppe intérieure (6a) par un second conduit d'injection de gaz (8) à la température de la matière et balayant la surface libre de celle-ci, la température de ces trois sources de chauffage étant régulée par au moins un dispositif distributeur et échangeur thermique (19,20) entre ces trois sources de chauffage,
. le second conduit d'injection de gaz (8) permettant d'évacuer les gaz malodorants dégagés dans l'enveloppe intérieure (6a) par un conduit d'évacuation (12), ce conduit d'évacuation étant muni d'un dispositif de mise en dépression (21) afin que ces gaz soient injectés dans le dispositif de chauffage (20) pour y être brûlés, soumis à pyrolyse et réutilisés par une première source de chauffage comme gaz caloporteur,
. au moins un dispositif à ultrasons disposé de manière à pouvoir émettre des ultrasons dans l'enveloppe intérieure (6a),
. au moins un dispositif d'émission de champs magnétiques disposé de manière à diffuser des champs magnétiques dans l'enveloppe intérieure (6a),
. une unité centrale de contrôle de la pression, de la température, de la vitesse de rotation du rotor (10) et de l'hygrométrie dans l'enveloppe intérieure, de commande de la puissance des différentes sources de chauffage et de la vitesse du rotor, ainsi que du déclenchement et de l'arrêt des dispositifs d'émission d'ultrasons et de champs magnétiques, à partir de données entrées, et
. un dispositif de réglage à l'intérieur de la chambre de pyrolyse permettant d'augmenter ou de diminuer la turbulence des gaz brûlés afin d'en augmenter ou d'en diminuer ainsi le temps de séjour en fonction de la température de pyrolyse comprise entre 700 et 2000° C.

## Patentansprüche

1. Verfahren zur Behandlung und Umwandlung von bioorganischem Material pflanzlicher und/oder tierischer Herkunft durch eine Kombination von biomechanischen Vorgängen in einer geschlossenen Umhüllung (6, 6a, 6b), um neue biologische Produkte zu erhalten, dadurch gekennzeichnet, daß es die folgenden Schritte umfaßt:
a) Erhitzung des Materials (120) ab der Einfülltemperatur T_{A} bis zu einer Temperatur T_{B} von ungefähr 117°C, was eine Erhöhung des Drucks (100-101) bis zu einem Wert P_{B} von ungefähr 3 bar zur Folge hat, und Knetung des Materials mit einer Geschwindigkeit zwischen 5 und 15 T/mn während einer Dauer von ungefähr 15 Minuten,
b) Gleichzeitige Erhöhung der Temperatur (120, 121) von T_{B} nach T_{C}, und des Drucks (101-102) von P_{B} nach P_{C} bis zu Werten von ungefähr 150°C bzw. 5 bar; und Erhöhung der Knetgeschwindigkeit von ungefähr 2 bis 20 T/mn während einer Dauer von ungefähr 10 Minuten,
c) Verringerung der Temperatur (122-123) von T_{C} nach T_{D}, auf ungefähr 135°, und Erhöhung des Drucks (103-104) von P_{C} auf einen Wert P_{D} zwischen 10 und 20 bar, und Erhöhung der Knetgeschwindigkeit bis auf ungefähr 15 T/mn während einer Dauer von ungefähr 20 bis 30 Minuten,
d) Hydrolyse und Homogenisierung bei der konstanten Temperatur T_{D} (123-124) und dem konstanten Druck P_{D} (104-105), und bei erhöhter konstanter Knetgeschwindigkeit von ungefähr 10 bis 40 T/mn während einer Dauer zwischen 20 und 30 mn,
e) Dehydratisierung durch Abkühlung des Materials (124-126), und Verringerung des Drucks (105-106) bis zu Werten von T_{E} bzw. P_{E} von höchstens 90°C und 0,5 bar, was neue Trocknungs- und Konditionierungsbehandlungen oder eine neue Einfüllung von Material bei einer verringerten, konstanten Knetgeschwindigkeit von ungefähr 5 bis 10 T/mn ermöglicht.

2. Verfahren gemäß Anspruch 1, dadurch gekennzeichnet, daß anschließend die folgenden Schritte einmal oder mehrmals ausgeführt werden:
f) Wiedereinfüllung (106-107, 126) von Material bei der Temperatur T_{E} und dem Druck P_{E}, die der Temperatur und dem Druck des bereits behandelten Materials entsprechen,
g) Gleichzeitige Erhöhung der Temperatur (126-127) und des Drucks (107-108) bis zu Werten T_{F} von ungefähr 135°C bzw. P_{F} zwischen 10 und 20 bar, wobei zugleich die Knetgeschwindigkeit bis zu Werten von ungefähr 20 T/mn während einer Dauer von ungefähr 4 Minuten erhöht wird,
h) Sekundäre Hydrolyse und Homogenisierung bei konstanter Temperatur T_{F} (127-128) und konstantem Druck P_{F} (108-109) bei einer konstanten, erhöhten Knetgeschwindigkeit von ungefähr mindestens 20 T/mn während einer Dauer von ungefähr 3 Minuten, und
i) Dehydratisierung durch Abkühlung des Materials (128-129) und Verringerung des Drucks (109-110) bis zu Werten T_{G} kleiner oder gleich 90°C bzw. P_{G} kleiner oder gleich 0,5 bar, was neue Trocknungs- und Konditionierungsbehandlungen oder eine neue Einfüllung von Material bei einer verringerten Knetgeschwindigkeit von ungefähr 5 bis 10 T/mn während einer Dauer bis zu 20 mn ermöglicht.

3. Verfahren gemäß Anspruch 1 oder 2, dadurch gekennzeichnet, daß vor dem Einfüllen des Materials eine Phase der Kalibrierung des Materials durch Mahlen, Vorerhitzen auf Temperaturen T_{A} von ungefähr 20 bis 90°C, und Kneten vorgesehen ist.

4. Verfahren gemäß irgendeinem der vorhergehenden Ansprüche, dadurch gekennzeichnet, daß es zwischen jedem Schritt zur gleichzeitigen Erhöhung der Temperatur und des Drucks einen Schritt zur Sterilisation (121-122, 102-103) des Materials bei konstantem Druck (P_{C}) und konstanter Temperatur (T_{C}), und eine Verringerung der Knetgeschwindigkeit auf einen konstant gehaltenen Wert von ungefähr 10 T/mn während dieser Stufe umfaßt.

5. Verfahren gemäß irgendeinem der vorhergehenden Ansprüche, dadurch gekennzeichnet, daß die Schritte zur Druckerhöhung durch Zuführung eines einfachen oder neutralen Gases, oder eines speziellen Gases erfolgen, dessen Temperatur so gesteuert wird, daß sie der Temperatur des behandelten Materials folgt.

6. Verfahren gemäß irgendeinem der vorhergehenden Ansprüche, dadurch gekennzeichnet, daß bei den Dehydratisierungsschritten eine Abführung des Gemisches aus den Wasserhaltungsgasen und dem Wasserdampf erfolgt durch Spülung der Oberfläche des Materials mit Luft oder Gas, die auf eine Temperatur, die derjenigen des Materials entspricht, erhitzt sind.

7. Verfahren gemäß irgendeinem der vorhergehenden Ansprüche, dadurch gekennzeichnet, daß das Material während der Druckerhöhungsschritte Ultraschall ausgesetzt wird.

8. Verfahren gemäß Anspruch 7, dadurch gekennzeichnet, daß das Material in dem Augenblick des Zusammenbackens Ultraschall ausgesetzt wird.

9. Verfahren gemäß irgendeinem der vorhergehenden Ansprüche, dadurch gekennzeichnet, daß das Material während der Druckerhöhungen, der Hydrolyse- und Homogenisierungsstufe, und/oder der Druckverringerung einem Magnetfeld ausgesetzt wird.

10. Verfahren gemäß irgendeinem der vorhergehenden Ansprüche, dadurch gekennzeichnet, daß das verwendete einfache oder neutrale Gas aus Stickstoff (N₂) und/oder Kohlendioxid (CO₂) besteht.

11. Verwendung einer Vorrichtung (6) für die Behandlung und Umwandlung von organischem, pflanzlichem oder tierischem Material, wobei die Vorrichtung umfaßt:
- eine äußere Hülle (6b) und eine innere Hülle (6a), wobei die innere Hülle (6a) das zu behandelnde und umzuwandelnde Material aufnimmt,
- einen Rotor (10), der mit einem Arm versehen ist und von einem Motor (11) angetrieben wird, zum Mahlen, Kneten, Feinmahlen, Bewegen und Abführen des Materials und der erhaltenen Produkte,
- eine Rohrleitung zum Einfüllen von Material in die innere Hülle (6b),
- eine erste Rohrleitung zum Einblasen von Gas, das die Erhöhung des Drucks in der Hülle ermöglicht,
- eine erste Heizquelle, die eine Heizvorrichtung (20) und ein System von Rohrleitungen (14, 15, 16) umfaßt, welche die Erhitzung der inneren Hülle durch Strömen von Gas oder eines Wärmeübertragungsfluids, deren Temperatur durch die Heizvorrichtung (20) gesteuert wird, über die Wände der inneren Hülle ermöglichen,
- eine zweite Heizquelle, die aus einem Wärmeübertragungsfluid besteht, das längs des Inneren des Rotors (10) strömt, und
- eine dritte Heizquelle, die aus einem Strom von erhitzter Luft oder erhitztem Gas besteht, der durch eine zweite Gaseinblasleitung (8) mit der Temperatur des Materials in die innere Hülle (6a) eingeblasen wird und die freie Oberfläche des Materials spült, wobei die Temperatur dieser drei Heizquellen durch mindestens eine thermische Verteil- und Austauschvorrichtung (19, 20) zwischen diesen drei Heizquellen geregelt wird,
- wobei die zweite Gaseinblasleitung (8) ermöglicht, die in der inneren Hülle (6a) freigesetzten, übelriechenden Gase durch eine Abführleitung (12) abzuführen, wobei diese Abführleitung mit einer Unterdruckerzeugungsvorrichtung (21) versehen ist, damit diese Gase in die Heizvorrichtung (20) eingeblasen werden, um dort verbrannt zu werden, einer Pyrolyse unterworfen zu werden, und von einer ersten Heizquelle als Wärmeübertragungsgas wiederverwendet zu werden,
- mindestens eine Ultraschallvorrichtung, die so angeordnet ist, daß sie Ultraschall in die innere Hülle (6a) aussenden kann,
- mindestens eine Vorrichtung Aussenden von Magnetfeldern, die so angeordnet ist, daß sie Magnetfelder in die innere Hülle (6a) aussendet,
- eine zentrale Einheit zur Kontrolle des Drucks, der Temperatur, der Rotationsgeschwindigkeit des Rotors (10) und der Hygrometrie in der inneren Hülle, sowie zur Steuerung der Leistung der verschiedenen Heizquellen und der Geschwindigkeit des Rotors, sowie der Einschaltung und Ausschaltung der Vorrichtungen zur Aussendung von Ultraschall und Magnetfeldern aufgrund von eingegebenen Daten, und
- eine Einstellvorrichtung innerhalb der Pyrolysekammer, die ermöglicht, die Turbulenz der verbrannten Gase zu vergrößern oder zu verringern, um so deren Verweilzeit in Abhängigkeit von der zwischen 700 und 2000°C liegenden Pyrolysetemperatur zu vergrößern oder zu verringern.

## Claims

1. Process for treating and transforming bio-organic material of plant and/or animal origin, by a combination of biomechanical actions in a confined cabinet (6, 6a, 6b), into new biological products, characterised in that it comprises the following steps of:
a) heating the material (120) from the loading temperature T_{A} to a temperature T_{B} of about 117°C, bringing about a pressure increase (100-101) to a value P_{B} of about 3 bar, and mixing of the material at a rate of between 5 and 15 revolutions per minute, for a duration of about 15 minutes,
b) simultaneously increasing the temperature (120, 121) from T_{B} to T_{C} and the pressure from (101-102) P_{B} to P_{C} to respective values of about 150°C and 5 bar, and increasing the mixing rate to about 2 to 20 revolutions per minute, for a duration of about 10 minutes,
c) decreasing the temperature (122-123) from T_{C} to T_{D} of about 135°C, and increasing the pressure (103-104) of P_{C} to a value P_{D} of between 10 and 20 bar, and increasing the mixing rate to about 15 revolutions per minute, for a duration of about 20 to 30 minutes,
d) hydrolysing and homogenising at a constant temperature T_{D} (123-124) and constant pressure P_{D} (104-105), and at an increased constant mixing rate of about 10 to 40 revolutions per minute, for a duration of between 20 and 30 minutes,
e) dehydrating by cooling the material (124-126), and decreasing the pressure (105-106) to respective values T_{E} and P_{E} of maximum 90°C and 0.5 bar, allowing new drying or conditioning treatments or a new loading of the material, at a constant reduced mixing rate of about 5 to 10 revolutions per minute.

2. Process according to claim 1, characterised in that it is followed, one or more times, by the following steps of:
f) reloading (106-107, 126) the material at a temperature T_{E} and pressure P_{E} corresponding to the temperature and pressure of the material which has already been treated,
g) simultaneously increasing the temperature (126-127) and the pressure (107-108) to respective values T_{F} of about 135°C and P_{F} of between 10 and 20 bar, while increasing the mixing rate to values of about 20 revolutions per minute, for a duration of about 4 minutes,
h) secondarily hydrolysing and homogenising at a constant temperature (127-128) and constant pressure (108-109) T_{F} and P_{F}, at a constant increased mixing rate of about 20 revolutions per minute, for a duration of about 3 minutes, and
i) dehydrating by cooling the material (128-129), and decreasing the pressure (109-110) to respective values T_{G}, equal or less than 90°C, and P_{G}, equal or less than 0.5 bar, allowing new drying and conditioning treatments or a new loading of the material, at a reduced mixing rate of about 5 to 10 revolutions per minute, for a duration possibly attaining 20 minutes.

3. Process according to claim 1 or claim 2, characterised in that it is preceded by a calibration phase of the material by shredding , by a pre-heating phase at temperatures T_{A} of about 20 to 90°C, and by a mixing phase prior to loading the material.

4. Process according to any of the preceding claims, characterised in that it comprises, between each step of simultaneously increasing the temperature and pressure, a sterilisation step (121-122, 102-103) of the material at a constant pressure (P_{C}) and constant temperature (T_{C}), and a decrease of the mixing rate at a value which is maintained constant at about 10 revolutions per minute during this stage.

5. Process according to any of the preceding claims, characterised in that the steps of increasing the pressure are carried out by feeding a simple or neutral gas, or a particular gas, the temperature of which is controlled in order to follow the temperature of the treated material.

6. Process according to any of the preceding claims, characterised in that the steps of dehydrating are carried out by evacuating the mixture of dewatering gases and water vapour by clearing the surface of the material with air or gas which have been heated to a temperature corresponding to that of the material.

7. Process according to any of the preceding claims, characterised in that the material is subjected to ultrasound during the steps of increasing the pressure.

8. Process according to claim 7, characterised in that the material is subjected to ultrasound at the time of caking.

9. Process according to any of the preceding claims, characterised in that the material is subjected to a magnetic field during the steps of increasing the pressure, the hydrolysis and homogenisation stage, and/or the step of decreasing the pressure.

10. Process according to any of the preceding claims, characterised in that the simple or neutral gas used consists of nitrogen (N₂) and/or carbon dioxide (CO₂).

11. Use of an apparatus (6) for treating and transforming plant or animal organic material, comprising:
- an outer shell (6b) and an inner shell (6a), the inner shell (6a) receiving the material to be treated and transformed,
- a rotor (10) provided with arms and driven by a motor (11), for shredding, mixing, crushing, stirring and draining off the material and the obtained products,
- a duct for loading the material into the inner shell (6b),
- a first duct for injecting the gas allowing the increase of pressure in said shell,
- a first heating source comprising a heating device (20) and a system of ducts (14, 15, 16) allowing heating of the inner shell by circulation, on its walls, of gas or a coolant fluid, the temperature of which is controlled by the heating device (20),
- a second heating source consisting of a coolant fluid circulating along the entire interior of the rotor (10), and
- a third heating source consisting of a flow of air or of heated gases which is injected into the inner shell (6a) by a second duct for injecting the gas (8) at the temperature of the material, and clearing the free surface of the material, the temperature of these three heating sources being regulated by at least one thermal distributor and exchanger device (19, 20) between these three heating sources,
- the second duct for injecting the gas (8) allowing the evacuation of the malodorous gases developed in the inner shell (6a) by an evacuation duct (12), said evacuation duct being provided with a device for generating low pressure (21) in order that these gases are injected into the heating device (20) for being burnt therein, subjected to pyrolysis and reutilised by a first heating source as a coolant gas,
- at least one ultrasound device arranged such that ultrasound may be emitted into the inner shell (6a),
- at least one device for emitting magnetic fields arranged such that magnetic fields are diffused into the inner shell (6a),
- a central unit for monitoring the pressure, the temperature, the rotating speed of the rotor (10) and the humidity in the inner shell, for controlling the power of the different heating sources and the speed of the rotor, as well as the switching-on and the switching-off of the devices emitting the ultrasound and the magnetic fields, from input data, and
- a setting device within the pyrolysis chamber allowing the increase or the decrease of the turbulence of the burnt gases in order to increase or decrease the residence time thereof with respect to the temperature of pyrolysis, comprised between 700 and 2000°C.
